# EUROPEAN PATENT SPECIFICATION

(11) **EP 3 171 492 B1**
(45) Date of publication and mention of the grant of the patent: **12.05.2021**
(21) Application number: 14897774.7
(22) Date of filing: 17.07.2014
(51) Int. Cl.: H02K 9/04, H02K 5/20, H02K 5/18

(54) **ROTATING ELECTRIC MACHINE**
ELEKTRISCHE ROTATIONSMASCHINE
MACHINE ÉLECTRIQUE ROTATIVE

(43) Date of publication of application: 24.05.2017
(73) Proprietor: Hitachi Industrial Equipment Systems Co., Ltd., Tokyo 101-0022 (JP)
(72) Inventor: FUJISAWA Yukinari, Tokyo 101-0022 (JP); KAWASHIMA Takuya, Tokyo 101-0022 (JP)
(74) Representative: Strehl Schübel-Hopf & Partner
(86) International application number: PCT/JP2014/069072
(87) International publication number: WO 2016/009531

(56) References cited:
- DE-U1-202008 000 225
- JP-A- H 089 594
- JP-A- H 089 594
- JP-A- H07 245 915
- JP-A- H09 252 563
- JP-A- 2003 218 295
- JP-A- 2007 174 824
- JP-U- S62 107 546
- US-A1- 2008 080 137

## Description

### Technical Field

The present invention relates to a rotating electric machine, and particularly to a rotating electric machine having a cooling structure that guides cooling air to an outer surface of the rotating electric machine.

### Background Art

A size of a rotating electric machine generally tends to increase, when attempting to achieve a large output and a large torque. In accordance with the increase in size of the rotating electric machine, it is also required to increase a size of a machine-side device incorporated in the rotating electric machine, and thus there are problems such as a restriction of an installation space for the device and an increase in cost.

In the rotating electric machine, due to losses such as copper loss or iron loss caused by the load application in a driving state, heat is generated inside the rotating electric machine and is dissipated from a housing surface by heat conduction. By quickly performing the exhaust heat from the housing surface, it is possible to downsize the machine having the same output, and the cost can be reduced. Further, in the case of setting the same physique, it is possible to achieve a high output or a large torque. In a permanent magnet type rotating electric machine, since the temperature rise inside the rotating electric machine is suppressed, the temperature rise of the permanent magnet is also suppressed, and the tolerance to the permanent demagnetization of the permanent magnet is enlarged. Accordingly, the permanent magnet can be made thinner and a further reduction in cost is achieved.

In order to improve the cooling efficiency to the exhaust heat from the housing surface, a cooling fan is often adopted. An example of a cooling structure using the cooling fan is described in Patent Document 1. Patent Document 1 discloses a structure in which a cooling fan is provided at a central position of an anti-output shaft side, a plurality of fins extending radially in the radial direction is provided on an outer surface of an end bracket, the cooling air discharged from the cooling fan is rectified, and the cooling air is efficiently guided to the housing, thereby improving the cooling efficiency.

The document JP H08 9594 A discloses a rotating electric machine according to the preamble of claim 1. The document JP H 07 245915 A discloses a rotating electric machine according to the preamble of claim 2. The document DE 20 2008 00225 U1 discloses an air fan wherein the number of fins on an end bracket is the same as the number of fins on an outer housing,

### Citation List

### Patent Literature

Patent Document 1: JP 2014-37871 A

### Summary of Invention

### Technical Problem

In the cooling structure described in Patent Document 1, since the cooling fan provided at the central position of the anti-output shaft side is a self-excited fan, a plurality of fins provided on the end bracket outer surface is symmetrically disposed radially from the rotary shaft such that cooling performance is identical to any of a clockwise direction and a counterclockwise direction of the rotational direction of the motor shaft. Therefore, since the cooling air discharged from the self-excited fan is a turning flow, the cooling air collides with the fins of the end bracket outer surface extending linearly toward the outer circumferential side from the inner circumferential side while keeping the same center, that is, the fins become a ventilation resistance, and an air speed of the cooling air is decreased.

Further, in the cooling structure described in Patent Document 1, a plurality of fins provided on the end bracket outer surface is alternately disposed with respect to the fins of a housing outer circumferential surface to be connected. Therefore, since the ends of the fins of the housing outer circumferential surface which is not connected to the fins of the end bracket outer surface collide with the cooling air from the cooling fans, the turbulent flow is generated, and the cooling air interferes with each other. Thus, it is not possible to efficiently guide the cooling air to the motor main body side.

An object of the present invention is to more efficiently cool the rotating electric machine.

### Solution to Problem

This object is achieved by a rotating electric machine according to the present invention as defined in the independent claim 1. Further embodiments of the invention are defined in the dependent claims 2 - 10. The present invention includes a plurality of means for solving the aforementioned problems. As an example thereof, there is provided a rotating electric machine that includes a housing equipped with a plurality of cooling fins extending toward an output shaft side from an anti-output shaft side end on an outer circumferential surface; an end bracket equipped with a plurality of cooling fins provided on the anti-output shaft side of the housing on an outer surface; a cooling fan disposed at a central position of the anti-output shaft side; and a fan cover that is inclined so that cooling air from the fan is directed to the housing side, wherein the number of fins of the housing outer circumferential surface is equal to the number of fins of the end bracket outer surface, the plurality of fins on the outer surface of the end bracket is disposed on the inner circumferential side at an angle along an air direction of the cooling EPA-50271 air from the fan that is a turning flow, and on an outer circumferential side, end cross sections of the plurality of fins face anti-output shaft side end cross sections of the fins of the housing outer circumferential surface without a gap or with a small gap.

Further, as another example, there is provided a rotating electric machine that includes: a housing equipped with a plurality of cooling fins extending toward an output shaft side from an anti-output shaft side end on an outer circumferential surface; an end bracket provided on the anti-output shaft side of the housing; a cooling fan disposed at a central position of the anti-output shaft side; and a fan cover that is inclined so that cooling air from the fan is directed to the housing side and is equipped with a plurality of fins on an inner surface, wherein the number of fins of the fan cover inner surface is equal to the number of fins of the housing outer circumferential surface, the plurality of fins of the inner surface of the fan cover is disposed on the inner circumference side at an angle along an air direction of the cooling air from the fan that is a turning flow, and on the outer circumferential side, end cross sections of the plurality of fins face anti-output shaft side end cross sections of the fins of the housing outer circumferential surface without a gap or with a small gap.

Further, as still another example, there is provided a rotating electric machine that includes: a housing equipped with a plurality of cooling fins extending toward an output shaft side from an anti-output shaft side end on an outer circumferential surface; an end bracket equipped with a plurality of cooling fins provided on the anti-output shaft side of the housing on an outer surface; a cooling fan disposed at a central position of the anti-output shaft side; and a fan cover that is inclined so that cooling air from the fan is directed to the housing side and is equipped with a plurality of fins on an inner surface, wherein the number of fins of the housing outer circumferential surface, the number of fins of the fan cover inner surface, and the number of fins of the end bracket outer surface are equal to one another, the plurality of fins of the fan cover inner surface is disposed on the inner circumferential side at an angle along an air direction of the cooling air from the fan that is a turning flow, outer circumferential side end cross sections of the fins of the fan cover inner surface face inner circumferential side end cross sections of the fins of the end bracket outer surface without a gap or with a small gap, and on the outer circumferential side, the outer circumferential side end cross sections of the fins of the end bracket outer surface face the anti-output shaft side end cross sections of the fins of the housing outer circumferential surface without a gap or with a small gap.

### Advantageous Effects of Invention

According to the present invention, the cooling efficiency of the rotating electric machine is improved.

### Brief Description of Drawings

Fig. 1 is a diagram illustrating fins of an end bracket outer surface of Embodiment 1 to which the present invention is applied.
Fig. 2 is a side view illustrating a rotating electric machine of Embodiment 1.
Fig. 3A is a diagram illustrating the flow of cooling air of Embodiment 1.
Fig. 3B is a diagram illustrating the flow of the cooling air of Embodiment 1.
Fig. 4 is a side view illustrating a rotating electric machine of Embodiment 2 to which the present invention is applied.
Fig. 5 is a side view illustrating a rotating electric machine of Embodiment 3 to which the present invention is applied.
Fig. 6A is a diagram illustrating Modified Example of a fin shape that is provided on an end bracket outer surface.
Fig. 6B is a diagram illustrating Modified Example of a fin shape that is provided on a fan cover inner surface.

### Description of Embodiments

Embodiments of the present invention will be described with reference to the accompanying drawings. Further, in the respective drawings for describing the embodiments, the elements having the same function are denoted by the same names and the same reference numerals, and the repeated description thereof will not be provided.

### [Embodiment 1]

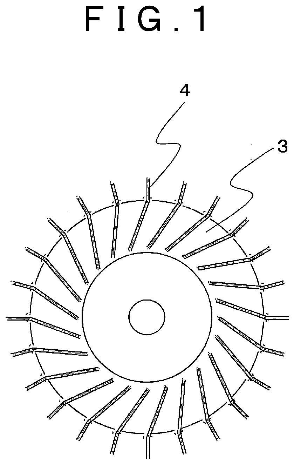

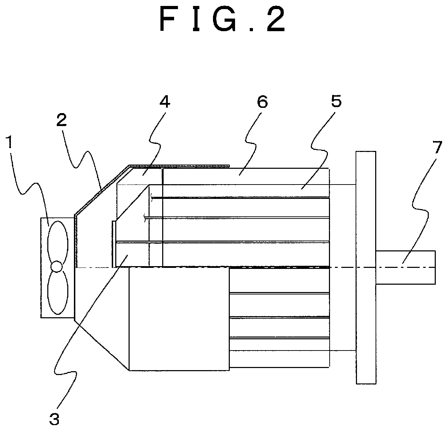

A rotating electric machine of Embodiment 1 to which the present invention is applied is illustrated in Figs. 1 and 2. Fig. 1 is a diagram illustrating a surface portion of an end bracket 3 of an anti-output shaft side that is seen from the anti-output shaft side. Further, Fig. 2 illustrates a side view of the rotating electric machine of Embodiment 1.

The rotating electric machine of Embodiment 1 includes a housing 5, and a rotary shaft 7 which is an output shaft, and a plurality of fins 6 extending to be parallel to the output shaft is provided on the outer circumferential surface of the housing 5. The fins 6 are provided, for example, radially in the radial direction from the outer circumferential surface of the housing. A plurality of fins may extend spirally with respect to the output shaft. An end bracket 3 is attached to the anti-output shaft side of the housing 5, and a radial inclination is provided on the outer surface of the end bracket 3 toward the outer circumferential side of the housing 5 around the shaft center side. That is, the outer surface of the end bracket 3 has an approximately truncated cone shape. Therefore, the cooling air flowing through the end bracket 3 toward the output shaft direction easily flows to the outer circumference of the housing. The shape of the outer surface of the end bracket 3 may be a truncated pyramid shape, a semi-spherical shape or a funnel shape, but is not limited to the truncated cone.

A plurality of fins 4 extending to the outer circumferential side from the inner circumferential side is arranged on the outer surface of the end bracket 3. The number of fins 4 is equal to the number of fins 6 provided on the outer circumferential surface of the housing 5. The fins 4 are provided so that the end side of the outer circumferential side from the end of the central side of the end bracket 3 is inclined in the left or right rotary direction. The inclined direction coincides with the turning direction of the turning air that is blown from a fan to be described below (in the case of this example, the outer circumferential side end is inclined in the right rotary direction). Furthermore, the endmost portions on the outer circumferential side of the fins 4 are formed to be parallel to a radiation extension line from the center of the end bracket 3. The fins 4 are configured so that an outer circumferential side end cross section of the parallel portion faces an end bracket side end cross section of the fins 6 on the outer circumference of the housing 5 without a gap or with a small gap, and both end cross sections are in close proximity to or in contact with each other. That is, between the set of fins 4 and 6 in which the end cross sections face each other, a flow passage that is continued toward the outer circumference of the housing 5 from the inner circumferential side of the end bracket 3 is formed.

Also, a fin width (thickness) of the end cross section vicinity of the fin 4 that faces at least the fin 6 is preferably equal to or greater than a fin width (thickness) of the end cross section of the fin 6, and both the widths are preferably the same. This is to eliminate an element (a step or a gap) that becomes a resistance of the cooling air 8 in the opposite portions of the end cross section.

In the anti-output shaft side extending direction of the rotary shaft 7, a separately excited fan 1 which generates the cooling air 8 is disposed by being supported by a fan cover 2. The separately excited fan is a fan which is driven by a motor or the like separate from the rotating electric machine, unlike the self-excited fan in which a fan center is connected to the rotary shaft 7 and which generates the cooling air by rotating with the rotary shaft 7. The cooling air generated by the separately excited fan 1 is a turning flow (in this example, the cooling air turns right to the end bracket 3). The present invention is not limited to the separately excited fan, and may be a self-excited fan, and it is preferable to generate the cooling air that becomes the turning flow to the end bracket 3.

The fan cover 2 has an approximately recessed bowl-shaped inner circumferential shape that covers the outer surface of the end bracket 3, and the entire vicinity of the anti-output shaft side of the fins 4 and the fins 6. Further, an inclination including an annular linear portion is provided in a part of the inner circumference of the fan cover 2, such that the cooling air 8 from the separately excited fan 1 installed in a center portion of the fan cover 2 in the extension line direction of the rotary shaft 7 is guided to the outer circumferential surface of the housing 5. Further, while this example illustrates the fan cover 2 made of metal such as iron or aluminum, the fan cover 2 may be made of a resin or the like.

Here, as illustrated in Fig. 2, the corners on the outer circumferential side of the fin 4 and in the anti-output shaft direction have a shape that is notched to be approximately parallel to the inclination of the inner circumference of the fan cover 2, and when installing the fan cover 2 on the rotating electric machine, a top portion of the notched portion and the inclined portion of the fan cover 2 are adapted to be in close proximity to or in contact with each other.

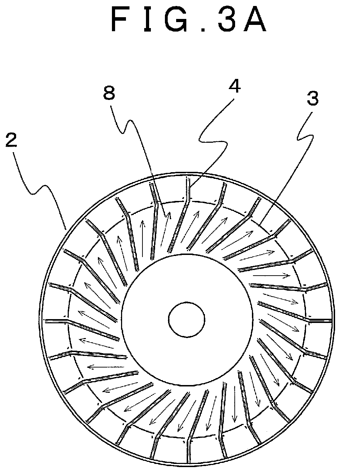

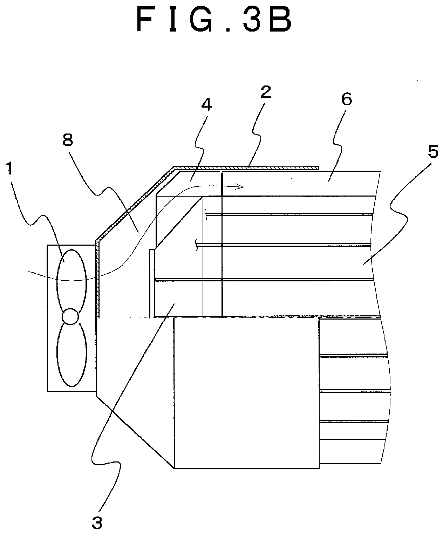

Next, the flow of the cooling air 8 will be described with reference to Figs. 3A and 3B. Fig. 3A is a diagram illustrating the surface portion of the end bracket 3 which is seen from the anti-output shaft side, and Fig. 3B is a diagram illustrating the rotating electric machine which is seen from the side surface. The cooling air 8 discharged from the fan 1 in the turning shape flows along the fins 4 of the outer surface of the end bracket 3 disposed along the air direction of the cooling air 8, on the inner circumferential side. Further, by the inclination provided on the fan cover 2 and the inclination of the outer surface of the end bracket 3 to which the cooling air 8 is blown, the cooling air 8 is guided to the outer circumferential side of the end bracket 3. The cooling air 8 guided to the outer circumferential side of the end bracket 3 smoothly passes through the gap among the fan cover 2, the outer circumferential side of the end bracket 3 and the outer circumferential surface of the housing 5, and is discharged to the housing 5 side.

The cooling air 8 that is blown to the end bracket 3 is a turning air. Since the outer circumferential sides of the fins 4 are inclined toward the turning direction of the turning air, the straight ingredients of the cooling air colliding against the fins 4 proceed to the outer circumferential side, without being attenuated by the inclined portions of the fins 4. That is, the turning air proceeds to the outer circumferential side, while keeping the air pressure. The air volume of the cooling air proceeding along the surface of the end bracket 3 and the surface of the housing 5 increases, and the cooling efficiency is improved.

Further, since the fins 4 and the fins 6 are disposed to face each other without a gap or with a small gap so that the end cross sections thereof are in close proximity to or in contact with each other, the flow passage ensured by both fins prevents occurrence of diffusion and turbulent flow of the cooling air having a large air volume, thereby making it possible to more efficiently distribute the cooling air 8 to the outer circumference of the housing 5.

Further, since the fins 4 are inclined toward the outer circumferential side, the fin length becomes longer as compared to a case where the fins are formed in a radial straight line from the center of the end bracket 3, and there is an effect such as an increase in heat dissipation ingredients (the outer surfaces of the fin 4 and the end bracket 3) of the end bracket 3.

Further, by the improvement effect of the cooling efficiency of the fins 4 and 6, it is possible to also expect the power saving and miniaturization of the separately excited fan 1. That is, as compared to a rotating electric machine to which the configuration of the present embodiment is not applied, in the rotating electric machine of the present embodiment, the air volume circulated through the surfaces of the end bracket 3 and the housing 5 increases. Therefore, it is also possible to reduce the size of the separately excited fan 1.

Further, in this embodiment, although the shape of the end bracket 3 is set as a proximately truncated cone shape to improve the flow efficiency of the cooling air, for example, when the rotating electric machine is a servo motor, in some cases, an encoder or the like for measuring the rotational speed or the like may be built in the end bracket 3 side of the anti-output shaft side. It is also possible to set the interior of the truncated end bracket 3 as an encoder built-in space. In particular, in the configuration that requires the encoder, it is not possible to install the self-excited fan on the anti-output shaft side, and a cooling structure of the separately excited fan may be taken. In the application of the configuration of this embodiment to the servo motor, since it is possible to improve the cooling efficiency, while maintaining the installation configuration or the space for the encoder, it can be said to be one of the particularly preferred applications.

### [Embodiment 2]

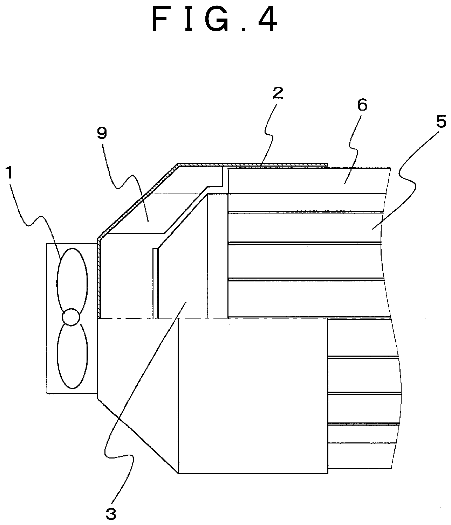

A rotating electric machine of Embodiment 2 to which the present invention is applied is illustrated in Fig. 4. Embodiment 1 has a configuration in which the fins 4 are provided on the outer surface of the end bracket 3 of the anti-output shaft side. However, in Embodiment 2, a plurality of fins 9 is provided on the inner surface of the fan cover 2 to which the separately excited fan 1 is mounted, rather than the outer surface of the end bracket 3.

The fins 9 are formed from the inner circumferential side of the inner surface of the fan cover 2 to a position corresponding to the fins 6 of the outer circumferential surface of the housing 5. The number of fins 9 is equal to the number of fins 6 provided on the outer circumferential surface of the housing 5.

The fins 9 provided on the inner surface of the fan cover 2 are disposed on the inner circumferential side at an angle along the air direction of the cooling air 8 discharged in a turning shape from the separately excited fan 1. Further, the fins 9 form a linear shape directed from the inner circumferential side to the outer circumferential side, are refracted at a certain point, for example, at a position of the outer circumferential surface of the housing 5, and are provided in a linear shape toward the outer circumferential side.

Further, as in the fins 4 of Embodiment 1, the outer circumferential endmost cross sections of the fins 9 face the end cross sections of the fins 6 so as to be in close proximity to or in contact with each other without a gap or with a small gap.

By the structure of Embodiment 2, the same effects as in Embodiment 1 are obtained, and it is possible to alleviate the collision between the cooling air 8 and the fins 9. Further, it is possible to suppress the turbulent flow that is emitted by collision of the cooling air 8 with the ends of the fins 6 of the outer circumferential surface of the housing 5, it is possible to smoothly guide the cooling air 8 to the housing side, and it is possible to improve the cooling efficiency of the rotating electric machine.

Further, by providing the fins 9 on the fan cover 2, the fins can be provided near the separately excited fan 1 to improve the rectifying effect of the cooling air.

Further, as compared to the fins 4 of Embodiment 1, since the fins 9 itself of Embodiment 2 do not require the functions as a radiation ingredient, it can be said that the fan cover 2 is easily manufactured with a resin or the like at low cost. It is also possible to expect benefits of the manufacturing cost and lightweight, while improving the cooling efficiency of the rotating electric machine.

In addition, by providing the fins 9 on the fan cover 2 and integrally installing the separately excited fan 1, it is also possible to expect benefits of the manufacturing and assembling of the rotating electric machine.

### [Embodiment 3]

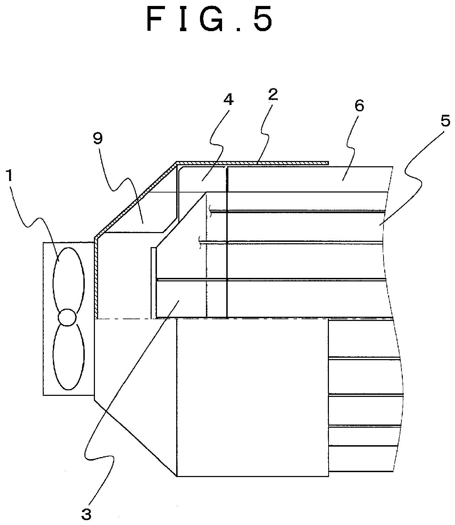

A rotating electric machine of Embodiment 3 to which the present invention is applied is illustrated in Fig. 5. In Embodiment 3, a plurality of fins 4 is provided on the outer surface of the end bracket 3 of the anti-output shaft side, and a plurality of fins 9 is provided on the inner surface of the fan cover 2 to which the separately excited fan 1 located at the center of the anti-output shaft is mounted. The numbers of fins 4 and the fins 9 are the same as the number of fins 6 provided on the outer circumferential surface of the housing 5.

The fins 9 provided on the inner surface of the fan cover 2 are arranged on the inner circumferential side at an angle along the air direction of the cooling air 8 to be discharged in a turning shape from the separately excited fan 1. Further, end cross sections of the fins 9 formed on the inner surface of the fan cover 2 face end cross sections of the fins 4 formed on the outer surface of the end bracket 3 so as to be in close proximity to or in contact with each other without a gap or with a small gap. A fin body constituted by the fins 9 and the fins 4 has a linear shape directed from the inner circumferential side to the outer circumferential side, is refracted at a certain point, for example, at a position of the outer circumferential surface of the housing 5, and is formed in a linear shape toward the outer circumferential side. Further, on the outer circumferential portion of the end bracket 3, the end cross sections of each fin 4 face the corresponding end cross sections of the fins 6 of the housing outer circumferential surface so as to be in close proximity to or in contact with each other without a gap or with a small gap.

By the structure of Embodiment 3, the same effects as in Embodiment 1 and Embodiment 2 are attained, and it is possible to alleviate the collision between the cooling air 8 and the fins 9 of the inner surface of the fan cover 2 or the fins 4 of the outer surface of the end bracket 3. Further, it is possible to suppress an occurrence of turbulent flow in a connecting portion between the fins 9 and the fins 4, and in a connecting portion between the fins 4 and the fins 6, it is possible to smoothly guide the cooling air 8 to the housing side, and it is possible to improve the cooling efficiency of the rotating electric machine.

Further, by providing the fins 9 on the fan cover 2, as in Embodiment 2, the fins can be provided near the separately excited fan 1 to improve the rectifying effect of the cooling air.

### [Embodiment 4]

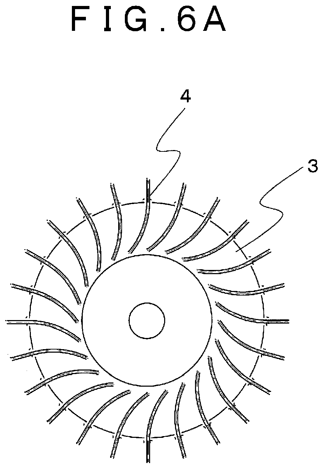

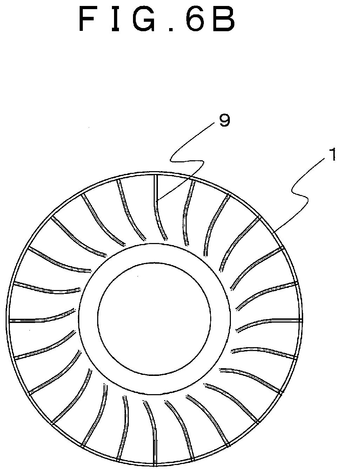

A fourth embodiment is configured so that the shape of the fins 4 or the fins 9 is changed from those of Embodiment 1 or Embodiment 2. Fig. 6A is a diagram illustrating a modified example of a fin shape that is provided on the end bracket outer surface as viewed from the anti-output shaft side, Fig. 6B illustrates a modified example of the fin shape that is provided on the fan cover inner surface as viewed from the output shaft side.

In Fig. 6A, the shape of the fins 4 of the outer surface of the end bracket 3 is disposed along the turning direction of the cooling air on the inner circumferential side, is smoothly curved from the inner circumference side toward the outer circumferential side, and is formed in a linear shape at a certain point, for example, from the position corresponding to the outer circumference of the housing toward the outer circumferential side of the end bracket 3.

Furthermore, in Fig. 6B, the shape of the fins 9 of the inner surface of the fan cover 2 is disposed along the turning direction of the cooling air on the inner circumferential side, is smoothly curved from the inner circumference side toward the outer circumferential side, and is formed in a linear shape at a point, for example, from the position corresponding to the outer circumference of the housing toward the outer circumferential side of the end bracket 3.

In this embodiment, since the fins 4 of the outer surface of the end bracket 3, or the fins 9 of the inner surface of the fan cover 2 are smoothly curved from the inner circumferential side toward the outer circumference, it is possible to more smoothly guide the cooling air to the housing side, and it is possible to improve the cooling efficiency of the rotating electric machine.

### List of Reference Signs

- 1: separately excited fan
- 2: fan cover
- 3: end bracket
- 4: fin of end bracket outer surface
- 5: housing
- 6: fin of housing outer circumferential surface
- 7: rotary shaft (output shaft)
- 8: cooling air from separately excited fan
- 9: fin of fan cover inner surface

## Claims

1. A rotating electric machine comprising:
a housing (5) equipped with a first plurality of cooling fins (6) extending toward an output shaft side from an anti-output shaft side end on an outer circumferential surface;
an end bracket (3) provided on the anti-output shaft side of the housing (5);
a cooling fan (1) disposed at a central position of the anti-output shaft side; and
a fan cover (2) that is inclined so that cooling air from the fan (1) is directed to the housing side, a second plurality of fins (4, 9) on an inner surface of said fan cover (2) or on an outer surface of said end bracket (3),
wherein
the second plurality of fins (4, 9) is disposed on the inner circumferential side at an angle along an air direction of the cooling air from the fan (1) that is a turning flow, and on the outer circumferential side, end cross sections of the second plurality of fins (4, 9) face anti-output shaft side end cross sections of the fins (6) of the housing outer circumferential surface without a gap or with a small gap,
**characterized in that** the number of fins (6) of the housing outer circumferential surface is equal to the number of fins (4,9) of said second plurality of fins (4,9), and
said second plurality of fins (4, 9) is inclined in the rotary direction of the cooling fan (1) toward the outer circumferential side, wherein the endmost portions on the outer circumferential side of the fins (4,9) are formed to be parallel to a radiation extension line from the center of the end bracket (3) and wherein the fins (4,9) are configured so that an outer circumferential side end cross section of the parallel portion faces an end bracket side end cross section of the fins (6) on the outer circumference of the housing (5) without a gap or with a small gap, and both end cross sections are in close proximity to or in contact with each other.

2. The rotating electric machine according to claim 1, wherein the fins (4, 9) of the second plurality of fins form a linear shape directed toward the outer circumferential side from the inner circumferential side, are refracted at a certain point, and are formed in a linear shape toward the outer circumferential side.

3. The rotating electric machine according to claim 1, wherein the fins (4) of the second plurality of fins are smoothly curved toward the outer circumferential side from the inner circumference side, and are formed in a linear shape toward the outer circumferential side from a certain point.

4. The rotating electric machine according to claim 1, wherein a thickness of the outer circumferential side end vicinity of the plurality of fins (4, 9) of the second plurality of fins is substantially equal to a thickness of the anti-output shaft side vicinity of the plurality of fins (6) of the housing outer circumferential surface.

5. The rotating electric machine according to claim 1, wherein the cooling fan (1) is a separately excited fan.

6. The rotating electric machine according to claim 5, wherein the separately excited fan (1) is attached to the fan cover (2).

7. A rotating electric machine according to one of claims 1 to 6,
wherein the fan cover (2) is equipped with fins (9) on an inner surface and the bracket (3) is equipped with fins (4) on an outer surface,
wherein the number of fins (6) of the housing outer circumferential surface, the number of fins (9) of the fan cover inner surface, and the number of fins (4) of the end bracket outer surface are equal to one another,
the plurality of fins (9) of the fan cover inner surface is disposed on the inner circumferential side at an angle along an air direction of the cooling air from the fan that is a turning flow,
outer circumferential side end cross sections of the fins (9) of the fan cover inner surface face inner circumferential side end cross sections of the fins (4) of the end bracket outer surface without a gap or with a small gap, and
on the outer circumferential side, the outer circumferential side end cross sections of the fins (4) of the end bracket outer surface face the anti-output shaft side end cross sections of the fins (6) of the housing outer circumferential surface without a gap or with a small gap.

8. The rotating electric machine according to claim 7, wherein a fin body constituted by the fins (9) of the fan cover inner surface and the fins of the (4) end bracket outer surface form a linear shape directed to the outer circumferential side from the inner circumferential side, is refracted at a certain point, and is formed in a linear shape toward the outer circumferential side.

9. The rotating electric machine according to claim 7, wherein a fin body constituted by the fins (9) of the inner surface of the fan cover (2) and the fins (4) of the end bracket outer surface is smoothly curved toward the outer circumferential side from the inner circumference side, and is formed in a linear shape toward the outer circumferential side from a certain point.

10. The rotating electric machine according to claim 7, wherein a thicknesses of the outer circumferential side end vicinity of the fins (9) of the fan cover inner surface is substantially equal to a thickness of the inner circumferential side end vicinity of the plurality of fins (4) of the end bracket outer surface, and
a thickness of the outer circumferential side end vicinity of the plurality of fins (4) of the end bracket outer surface is substantially equal to a thickness of the anti-output shaft side end vicinity of the plurality of fins (9) of the housing outer circumferential surface (6).

## Patentansprüche

1. Elektrische Rotationsmaschine, umfassend:
ein Gehäuse (5), das mit einer ersten Vielzahl von Rippen (6) zum Kühlen ausgestattet ist, die sich auf einer Außenumfangsfläche von einer Ausgangswellenseite zu einer der Ausgangswellenseite gegenüberliegenden Seite erstrecken;
eine Endhalterung (3), die an der der Ausgangswellenseite gegenüberliegenden Seite des Gehäuses (5) vorgesehen ist;
ein Kühlgebläse (1), das an einer zentralen Position der der Ausgangswellenseite gegenüberliegenden Seite angeordnet ist; und
eine Lüfterabdeckung (2), die so geneigt ist, dass Kühlluft von dem Lüfter (1) zur in Richtung des Gehäuses geleitet wird,
eine zweite Mehrzahl von Rippen (4, 9) an einer Innenfläche der Lüfterabdeckung (2) oder an einer Außenfläche der Endhalterung (3),
wobei die zweite Vielzahl von Rippen (4, 9) auf der inneren Umfangsseite in einem Winkel entlang einer Luftrichtung der Kühlluft aus dem Lüfter (1), die eine drehende Strömung ist, angeordnet ist, und auf der äußeren Umfangsseite Endquerschnitte der zweiten Vielzahl von Rippen (4, 9) den ausgagswellenseitigen Endquerschnitten der Rippen (6) der Gehäuse-Außenumfangsfläche ohne Spalt oder mit einem kleinen Spalt gegenüber liegen,
**dadurch gekennzeichnet, dass** die Anzahl der Rippen (6) der Außenumfangsfläche des Gehäuses gleich der Anzahl der Rippen (4, 9) der zweiten Vielzahl von Rippen (4, 9) ist, und
die zweite Vielzahl von Rippen (4, 9) in der Rotationsrichtung des Kühlgebläses (1) zur Außenumfangsseite hin geneigt ist, wobei die äußersten Abschnitte auf der Außenumfangsseite der Rippen (4, 9) so ausgebildet sind, dass sie von der Mitte der Endhalterung (3) aus parallel zu einer Abstrahlungs-Verlängerungslinie verlaufen, und wobei die Rippen (4, 9) so konfiguriert sind, dass ein außenumfangsseitiger Endquerschnitt des parallelen Abschnitts einem Endquerschnitt der Rippen (6) am Außenumfang des Gehäuses (5) an der Seite der Endhalterung ohne Spalt oder mit einem kleinen Spalt gegenüber liegt, und beide Endquerschnitte in unmittelbarer Nähe zueinander oder in Kontakt miteinander angeordnet sind.

2. Elektrische Rotationsmaschine nach Anspruch 1, wobei die Rippen (4, 9) der zweiten Vielzahl von Rippen eine geradlinige Form bilden, die von der inneren Umfangsseite zur äußeren Umfangsseite hin gerichtet ist, an einem bestimmten Punkt geknickt ist und in einer geradlinigen Form zur äußeren Umfangsseite hin ausgebildet ist.

3. Elektrische Rotationsmaschine nach Anspruch 1, wobei die Rippen (4) der zweiten Vielzahl von Rippen von der inneren Umfangsseite aus gleichmäßig zur äußeren Umfangsseite hin gekrümmt sind und ab einem bestimmten Punkt in einer geradlinigen Form zur äußeren Umfangsseite hin ausgebildet sind.

4. Elektrische Rotationsmaschine nach Anspruch 1, wobei eine Dicke der Vielzahl von Rippen (4, 9) aus der zweiten Vielzahl von Rippen in der Nähe von deren Ende an der äußeren Umfangsseite im Wesentlichen gleich einer Dicke der Vielzahl der Rippen (6) am Außenumfang des Gehäuses in der Nähe der der Abtriebswellenseite gegenüber liegenden Seite ist.

5. Elektrische Rotationsmaschine nach Anspruch 1, wobei der Kühllüfter (1) ein fremderregter Lüfter ist.

6. Elektrische Rotationsmaschine nach Anspruch 5, wobei der fremderregte Lüfter (1) an der Lüfterabdeckung (2) befestigt ist.

7. Elektrische Rotationsmaschine nach einem der Ansprüche 1 bis 6,
wobei die Lüfterabdeckung (2) an einer Innenfläche mit Rippen (9) und die Endhalterung (3) an einer Außenfläche mit Rippen (4) versehen ist,
wobei die Anzahl der Rippen (6) an der Außenumfangsfläche des Gehäuses, die Anzahl der Rippen (9) der Innenfläche der Lüfterabdeckung und die Anzahl der Rippen (4) der Außenfläche der Endhalterung einander gleich sind,
die Anzahl der Rippen (9) der Innenfläche der Lüfterabdeckung an der inneren Umfangsseite in einem Winkel entlang einer Luftrichtung der Kühlluft aus dem Lüfter, die eine Drehströmung ist, angeordnet ist,
außenumfangsseitige Endquerschnitte der Rippen (9) der Innenfläche der Lüfterabdeckung innenumfangsseitigen Endquerschnitten der Rippen (4) der Endhalterungsaußenfläche ohne einen Spalt oder mit einem kleinen Spalt gegenüberliegen, und
auf der Außenumfangsseite die außenumfangsseitigen Endquerschnitte der Rippen (4) der Endhalterungs-Außenfläche den ausgangswellenseitigen Endquerschnitten der Rippen (6) der Gehäuseaußenumfangsfläche ohne Spalt oder mit einem kleinen Spalt gegenüber angeordnet sind.

8. Elektrische Rotationsmaschine nach Anspruch 7, wobei ein Rippenkörper, der durch die Rippen (9) der Innenfläche der Lüfterhaube und die Rippen der Außenfläche der Endhalterung (4) gebildet wird, eine geradlinige Form bildet, die von der inneren Umfangsseite zur äußeren Umfangsseite hin aus gerichtet ist, an einem bestimmten Punkt einen Knick aufweist und in einer geradlinigen Form zur äußeren Umfangsseite hin ausgebildet ist.

9. Elektrische Rotationsmaschine nach Anspruch 7, wobei ein Rippenkörper, der durch die Rippen (9) der inneren Oberfläche der Lüfterabdeckung (2) und die Rippen (4) der äußeren Oberfläche der Endhalterung gebildet wird, von der inneren Umfangsseite aus sanft zur äußern Umfangsseite hin gekrümmt ist und ab einem bestimmten Punkt in einer geradlinigen Form zur äußeren Umfangsseite hin ausgebildet ist.

10. Elektrische Rotationsmaschine nach Anspruch 7, wobei eine Dicke der Rippen (9) in einer Umgebung des außenumfangsseitigen Endes der inneren Oberfläche der Lüfterabdeckung im Wesentlichen gleich einer Dicke der Vielzahl von Rippen (4) in einer Umgebung des innenumfangsseitigen Endes der äußeren Oberfläche der Endhalterung ist, und
eine Dicke der Vielzahl von Rippen (4) der Außenfläche der Endhalterung in einer Umgebung von deren außenumfangsseitigem Ende im Wesentlichen gleich einer Dicke der Vielzahl von Rippen (9) der Gehäuseaußenumfangsfläche (6) in einer Umgebung von deren ausgangswellenseitigem Ende ist.

## Revendications

1. Machine électrique rotative comprenant :
un logement (5) équipé avec une première pluralité d'ailettes de refroidissement (6) s'étendant vers un côté d'arbre de sortie depuis une extrémité de côté d'arbre anti-sortie sur une surface circonférentielle extérieure ;
un support d'extrémité (3) prévu sur le côté d'arbre anti-sortie du logement (5) ;
un ventilateur de refroidissement (1) disposé en une position centrale du côté d'arbre anti-sortie ; et
un capot (2) de ventilateur qui est incliné de telle manière que l'air de refroidissement provenant du ventilateur (1) est dirigé sur le côté logement,
une deuxième pluralité d'ailettes (4, 9) sur une surface intérieure dudit capot (2) de ventilateur ou sur une surface extérieure dudit support d'extrémité (3),
dans laquelle la deuxième pluralité d'ailettes (4, 9) est disposée sur le côté circonférentiel intérieur à un angle le long d'une direction d'air de l'air de refroidissement provenant du ventilateur (1) qui est un écoulement rotatif, et sur le côté circonférentiel extérieur, des sections transversales d'extrémité de la deuxième pluralité d'ailettes (4, 9) font face à des sections transversales d'extrémité de côté d'arbre anti-sortie des ailettes (6) de la surface circonférentielle extérieure de logement sans espace ou avec un petit espace,
**caractérisée en ce que** le nombre d'ailettes (6) de la surface circonférentielle extérieure de logement est égal au nombre d'ailettes (4, 9) de ladite deuxième pluralité d'ailettes (4, 9), et
ladite deuxième pluralité d'ailettes (4, 9) est inclinée dans le sens de rotation du ventilateur de refroidissement (1) vers le côté circonférentiel extérieur, dans laquelle les parties les plus extrêmes sur le côté circonférentiel extérieur des ailettes (4, 9) sont formées pour être parallèles à une ligne d'extension de rayonnement depuis le centre du support d'extrémité (3) et dans laquelle les ailettes (4, 9) sont configurées de telle manière qu'une section transversale d'extrémité de côté circonférentiel extérieur de la partie parallèle fait face à une section transversale d'extrémité de côté de support d'extrémité des ailettes (6) sur la circonférence extérieure du logement (5) sans espace ou avec un petit espace, et les deux sections transversales d'extrémité sont en étroite proximité ou en contact l'une de/avec l'autre.

2. Machine électrique rotative selon la revendication 1, dans laquelle les ailettes (4, 9) de la deuxième pluralité d'ailettes forment une forme linéaire dirigée vers le côté circonférentiel extérieur depuis le côté circonférentiel intérieur, sont réfractées à un certain point, et sont formées à une forme linéaire vers le côté circonférentiel extérieur.

3. Machine électrique rotative selon la revendication 1, dans laquelle les ailettes (4) de la deuxième pluralité d'ailettes sont régulièrement incurvées vers le côté circonférentiel extérieur depuis le côté circonférentiel intérieur, et sont formées à une forme linéaire vers le côté circonférentiel extérieur depuis un certain point.

4. Machine électrique rotative selon la revendication 1, dans laquelle une épaisseur de la proximité d'extrémité de côté circonférentiel extérieur de la pluralité d'ailettes (4, 9) de la deuxième pluralité d'ailettes est sensiblement égale à une épaisseur de la proximité de côté d'arbre anti-sortie de la pluralité d'ailettes (6) de la surface circonférentielle extérieure de logement.

5. Machine électrique rotative selon la revendication 1, dans laquelle le ventilateur de refroidissement (1) est un ventilateur excité séparément.

6. Machine électrique rotative selon la revendication 5, dans laquelle le ventilateur (1) excité séparément est fixé au capot (2) de ventilateur.

7. Machine électrique rotative selon l'une des revendications 1 à 6,
dans laquelle le capot (2) de ventilateur est équipé avec des ailettes (9) sur une surface intérieure et le support (3) est équipé avec des ailettes (4) sur une surface extérieure,
dans laquelle le nombre d'ailettes (6) de la surface circonférentielle extérieure de logement, le nombre d'ailettes (9) de la surface intérieure de capot de ventilateur, et le nombre d'ailettes (4) de la surface extérieure de support d'extrémité sont égaux les uns aux autres,
la pluralité d'ailettes (9) de la surface intérieure de capot de ventilateur est disposée sur le côté circonférentiel intérieur à un angle le long d'une direction d'air de l'air de refroidissement provenant du ventilateur qui est un écoulement rotatif,
des sections transversales d'extrémité de côté circonférentiel extérieur des ailettes (9) de la surface intérieure de capot de ventilateur font face à des sections transversales d'extrémité de côté circonférentiel intérieur des ailettes (4) de la surface extérieure de support d'extrémité sans espace ou avec un petit espace, et
sur le côté circonférentiel extérieur, les sections transversales d'extrémité de côté circonférentiel extérieur des ailettes (4) de la surface extérieure de support d'extrémité font face aux sections transversales d'extrémité de côté d'arbre anti-sortie des ailettes (6) de la surface circonférentielle extérieure de logement sans espace ou avec un petit espace.

8. Machine électrique rotative selon la revendication 7, dans laquelle un corps d'ailettes constitué par les ailettes (9) de la surface intérieure de capot de ventilateur et les ailettes (4) de la surface extérieure de support d'extrémité forme une forme linéaire dirigée sur le côté circonférentiel extérieur depuis le côté circonférentiel intérieur, est réfracté à un certain point, et est formé à une forme linéaire vers le côté circonférentiel extérieur.

9. Machine électrique rotative selon la revendication 7, dans laquelle un corps d'ailettes constitué par les ailettes (9) de la surface intérieure du capot (2) de ventilateur et les ailettes (4) de la surface extérieure de support d'extrémité est régulièrement incurvé vers le côté circonférentiel extérieur depuis le côté circonférentiel intérieur, et est formé à une forme linéaire vers le côté circonférentiel extérieur depuis un certain point.

10. Machine électrique rotative selon la revendication 7, dans laquelle une épaisseur de la proximité d'extrémité de côté circonférentiel extérieur des ailettes (9) de la surface intérieure de capot de ventilateur est sensiblement égale à une épaisseur de la proximité d'extrémité de côté circonférentiel intérieur de la pluralité d'ailettes (4) de la surface extérieure de support d'extrémité, et
une épaisseur de la proximité d'extrémité de côté circonférentiel extérieur de la pluralité d'ailettes (4) de la surface extérieure de support d'extrémité est sensiblement égale à une épaisseur de la proximité d'extrémité de côté d'arbre anti-sortie de la pluralité d'ailettes (9) de la surface circonférentielle extérieure (6) de logement.
